# EUROPEAN PATENT SPECIFICATION

(11) **EP 0 406 365 B1**
(45) Date of publication and mention of the grant of the patent: **13.09.1995**
(21) Application number: 90900467.3
(22) Date of filing: 14.11.1989
(51) Int. Cl.: G01S 13/28, G01S 7/28

(54) **DIGITAL RANGE CORRELATOR**
DIGITALER ENTFERNUNGSKORRELATOR
CORRELATEUR DE DISTANCE NUMERIQUE

(30) Priority: 20.12.1988 US 287190
(43) Date of publication of application: 09.01.1991
(73) Proprietor: Hughes Aircraft Company, Los Angeles, California 90045-0066 (US)
(72) Inventor: ZERKOWITZ, Avinoam, S., Canoga Park, CA 91307 (US)
(74) Representative: Colgan, Stephen James
(86) International application number: US8905004
(87) International publication number: WO9007129

(56) References cited:
- WO-A-86/02458
- WO-A-89/00279
- US-A- 4 237 461
- US-A- 4 513 288
- US-A- 4 758 839
- US-A- 4 833 479
- PATENT ABSTRACTS OF JAPAN, Vol. 10, No. 143 (P-459), 27 May 1986; & JP-A-60262079 (Boeicho Gijutsu Kenkyu Honbu) 25 December 1985
- PATENT ABSTRACTS OF JAPAN, Vol. 12, No. 62, (P-670), 25 February 1988; & JP-A-62204177 (Nec Corp.) & September 1987

## Description

This invention was made with Government support under Contract No. F08635-86-C-0201 awarded by the Department of the Air Force. The Government has certain rights in this invention.

### BACKGROUND OF THE INVENTION

### 1. Field of the Invention

The present invention relates to correlators. More specifically, the present invention relates to range correlators.

### 2. Description of Related Art

Range correlators generally provide an indication of range by timing the roundtrip delay of a transmitted pulse. In order to identify the return pulse, the returns are correlated with a known transmitted pulse. Many techniques are known in the art for performing the correlation. These techniques generally involve the digitizing of the return and the bit-by-bit matching thereof with a digitized representation of the transmitted pulse. The range bin with the best correlation provides the desired indication of range.

Time compression has been recognized as an advantageous correlation technique which is well adapted for range correlation. Time compression involves the transmission of a pulse, phase modulated in accordance with a correlation code, e.g., a Barker code. The return pulse is demodulated with the correlation code and the bits of each word of the resulting code are accumulated for each of a number of time slots, each time slot corresponding to a particular range bin. The time slot with the highest accumulated total is identified as corresponding to the range bin of the target.

Charge coupled devices (CCDs) are frequently used for time compression correlation. In a typical CCD correlator, analog samples of the return pulse are shifted one sample at a time through a register. The register is N bits long where N=code length. The signal returns either in phase or 180 degree out of phase for each PN code chop width. The N bits are all summed together, the 180 degree out of phase samples are inverted back to m-phase prior to summation. Since, each register in the CCD corresponds to a time slot and hence a range bin, the register with the highest sum is associated with the target range bin.

CCDs provide fast sample and hold, and slow storage for correlation. Nonetheless, CCDs have been found to be somewhat problematic when used in correlators. The manufacture of CCDs is not easily repeatable. That is, CCDs are difficult to manufacture consistently. The operating characteristics of the devices are known to vary unpredictably and nonuniformly with temperature, voltage, frequency, code length, offsets and etc. from device to device. This makes it difficult to keep the devices within specification and exacerbates the critical matching of the devices required for optimum performance in a correlator. The net result is a high cost associated with the manufacture, implementation and operation of a CCD correlator.

For reference US-4758839 describes a radar system with digital processing to determine height-terrain information. The radar receiver includes analog-to-digital converter means in the form of twin converters which operate on sine and cosine modulated quadrature signals. The digital samples consist of only one bit. The receiver also includes accumulator means in the form of a summation block which sums together the quadrature components, and a pulse summer which collects output samples after pulse correlation with the original transmitted signal. The receiver further includes detection logic to determine a cut-off threshold and to control the starting position of the input gate of the receiver.

WO-A-86/02458 describes an enhanced global positioning system (GPS) with delta-range processing. The system uses signals transmitted from global positioning satellites for reception by an antenna to create change in phase signals. The change in phase signals are measured over a predetermined time interval for storage in storage units. The stored signals are applied to a Kalman filter and back to the storage units so that each one second time interval includes the information from all previous time intervals. The accumulated information is referred to as accumulated Delta-Range information which permits determination of position by the system.

There remains a need in the art for a correlation system capable of performing time compression without the aforementioned shortcomings of CCD correlators.

### SUMMARY OF THE INVENTION

The present invention is defined in the claims, referring especially to claims 1, 3 and 6.

The need in the art is addressed by the digital range correlator of the present invention. The invention provides a correlation scheme which can be mechanized and produced repeatedly with minimal need for offsets and reduced power supply sensitivity. CCDs are eliminated and the need for channel-to-channel matching is obviated.

In one aspect, the digital correlator of the present invention includes an analog-to-digital converter for converting an input analog signal into a digital signal to provide a plurality of digital words one corresponding to each range gate. An accumulator is provided for summing the bits of each digital word to provide an accumulated sum for each range gate. The digital sums are compared in a processor to identify the range gate of the target. In a specific embodiment, the invention allows for the incorporation of a correlation code.

When implemented in LSI (large scale integrated circuit) technology, the present invention allows for a correlator with reduced size, power and cost and improved reliability and producibility relative to those designed in accordance with the teachings of the related art.

### BRIEF DESCRIPTION OF THE DRAWINGS

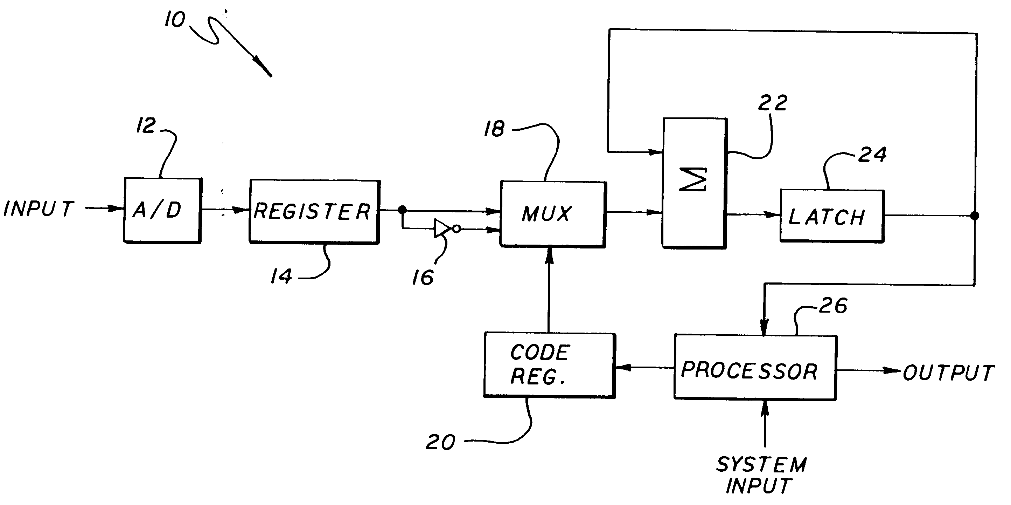

The Figure is a block diagram of an illustrative embodiment of the digital range correlator of the present invention.

### DESCRIPTION OF THE INVENTION

The Figure shows a block diagram of an illustrative embodiment of the digital range correlator 10 of the present invention. The correlator 10 includes an analog-to-digital converter 12 which digitizes an analog return pulse of a conventional radar system (not shown). The analog-to-digital (A/D) converter 12 provides an N m-bit digital words for each of a plurality of time slots (or range bins), each word or sample, corresponding to a bit of the PN code by which the radar pulse was transmitted and each time slot corresponding to a respective range zone. Each digital word is sequentially stored in a shift register 14 m bits wide, where m corresponds to the resolution of the A/D converter 12, and N + (R - 1) long, where R is the number of range bins. In the preferred embodiment, the output of the shift register 14 is provided to an inverter 16 and as a first input to a multiplexer (MUX) 18. A second input to the multiplexer 18 is provided by the output of the inverter 16. Thus, the first and second inputs to the multiplexer 18 are the true and complemented outputs of the shift register 14.

The output of the multiplexer 18 is controlled by the output of a second shift register 20. The second shift register provides storage for a correlation code and will hereinafter be referred to as the "code register". While any correlation code will suffice, a Barker code is particularly well suited for this application. Barker codes are well known in the art. In any event, the transmitted radar signal is modulated with the correlation code. For example, the phase of the transmitted radar pulse may be shifted 180 degrees with a bit code of logical "1" and zero degrees with a bit code of logical "0". The multiplexer 18 selects the true or complemented output of the shift register 14 depending on the code stored in the code register 20. The multiplexer 18 and the code register 20 thereby provide means for demodulating the digitized return pulse.

The output of the multiplexer 18 provides a first input to a conventional summing circuit 22. The output of the summing circuit 22 is stored in a latch 24. The output of the latch 24 is fed back to the summing circuit 22 and thus provides the second input thereof. The latch 24 is an m (plus addition overflow depending on code length) bit latch. For each range bin, each word stored in the latch 24 is summed with a decoded digitized return by the summing circuit 22. The process is repeated N times and the result is accumulated in the latch 24. The accumulated result is then accessed and stored by a processor 26. Data stored in the first register 14 is then shifted one range bin, under control of a conventional master clock (not shown), and the process is repeated. After data has been shifted through the shift register 14, the processor 26 identifies the range bin with the highest accumulated sum and outputs a signal corresponding thereto. The processor 26 is adapted to receive a system input and is connected to the code register 20 to facilitate a change in the correlation code by the system or the user.

Thus, a digital correlator has been described which includes an analog-to-digital converter for converting an input analog signal into a digital signal to provide a plurality of digital words one corresponding to each range gate. An accumulator is provided for summing the bits of each digital word to provide an accumulated sum for each range gate. The digital sums are compared in a processor to identify the range gate of the target. In the illustrative embodiment, the invention allows for the incorporation of a correlation code. The invention practices the digital range correlation method including the steps of:
a) converting an input analog signal into a digital signal to provide digital words each including at least two bits;
b) summing the bits of each digital word to provide first and second accumulated sums for said first and second digital words respectively; and
c) comparing the first accumulated sum to the second accumulated sum.

When implemented in LSI (large scale integrated circuit) technology, the present invention allows for a correlator with reduced size, power and cost and improved reliability and producibility relative to those designed in accordance with the teachings of the related art.

The present invention has been described herein with reference to a particular embodiment for a particular application. Those having ordinary skill in the art and access to the teachings provided herein will recognize additional modifications, applications and embodiments within the scope thereof. For example, the invention is not limited to a Barker correlation code. Further, the function of the processor may be performed by a number of components and/or circuits other than a processor per se. Further, the invention is not limited to the techniques shown for demodulation of the return nor that shown for accumulating sums. It is therefore intended by the appended claims to cover any and all such applications, modifications and embodiments within the scope of the invention as defined in the claims.

## Claims

1. A digital range correlator for detecting a target, by identifying a particular range gate associated with the target from a succession of range gates, the correlator comprising:
single analog-to-digital converter means (12) for providing a plurality of digital words for each range gate of the succession of range gates, each digital word including at least two bits;
accumulator means (22) for summing the digital words in each range gate to provide an accumulated sum for each range gate; and
processor means (26) for storing and for comparing the accumulated sums in each range gate to identify the particular range gate associated with the target.

2. A correlator according to claim 1, wherein the accumulator means (22) has an input and an output, the output being coupled as a feedback to the input to provide the accumulated sum.

3. A digital range correlator for detecting a target, by identifying a particular range gate associated with the target from a succession of range gates, the correlator comprising:
analog-to-digital converter means (12) for providing a plurality of digital words for each range gate of the succession of range gates, each digital word including at least two bits;
first register means (14) for storing the output of said analog-to-digital converter means, said first register including first and second outputs;
second register means (20) for storing a predetermined code word;
multiplexer means (18) having said first and second output of said first register as first and second inputs respectively and being controlled by the output of said second register for selectively providing said first and second inputs as the output thereof in response to the output of said second register;
accumulator means (22) for summing the digital words in each range gate to provide an accumulated sum for each range gate; and
processor means (26) for storing and for comparing the accumulated sums in each range gate to identify the particular range gate associated with the target.

4. A correlator according to claim 3 including latch means (24) for storing the sum of the individual bits provided by said accumulator for access by said accumulator and said processor.

5. A correlator according to claim 4 wherein the output of said latch means (14) is fed back to said accumulator and summed with the output of said multiplexer.

6. A method for providing digital range correlation to detect a target including the steps of:
(a) converting an analog input signal into a digital signal to provide a plurality of digital words for each of a succession of range gates, each digital word including at least two bits;
(b) summing the digital words in each range gate to provide an accumulated sum for each range gate; and
(c) comparing the summed digital words to identify the range gate associated with the target.

## Patentansprüche

1. Digitaler Entfernungskorrelator zum Erfassen eines Ziels durch ein Erkennen eines besonderen Entfernungsausschnitts, der dem Ziel zugeordnet ist, aus einer Reihenfolge von Entfernungsausschnitten, wobei der Korrelator aufweist:
eine einzige Analog-zu-Digital-Umwandlungseinrichtung (12), die eine Vielzahl von digitalen Wörtern für jeden Entfernungsausschnitt der Reihenfolge von Entfernungsausschnitten liefert, wobei jedes digitale Wort mindestens zwei Bits beinhaltet;
eine Zwischenspeichereinrichtung (22), die die digitalen Wörter in jedem Entfernungsausschnitt summiert, um eine aufsummierte Summe für jeden Entfernungsausschnitt zu liefern; und
eine Prozessoreinrichtung (26), die die aufsummierten Summen in jedem Entfernungsausschnitt speichert und vergleicht, um den besonderen Entfernungsausschnitt, der dem Ziel zugeordnet ist, zu erkennen.

2. Korrelator nach Anspruch 1 bei dem die Zwischenspeichereinrichtung (22) einen Eingang und einen Ausgang aufweist, wobei der Ausgang als eine Rückkopplung mit dem Eingang verbunden ist, um die aufsummierte Summe zu liefern.

3. Digitaler Entfernungskorrelator zum Erfassen eines Ziels durch ein Erkennen eines besonderen Entfernungsausschnitts, der dem Ziel zugeordnet ist, aus einer Reihenfolge von Entfernungsausschnitten, wobei der Korrelator aufweist:
eine Analog-zu-Digital-Umwandlungseinrichtung (12), die eine Vielzahl von digitalen Wörtern für jeden Entfernungsausschnitt der Reihenfolge von Entfernungsausschnitten liefert, wobei jedes digitale Wort mindestens zwei Bits beinhaltet;
eine erste Registereinrichtung (14), die das Ausgangssignal aus der Analog-zu-Digital-Umwandlungseinrichtung speichert, wobei das erste Register erste und zweite Ausgänge beinhaltet;
eine zweite Registereinrichtung (20), die ein vorbestimmtes Codewort speichert;
eine Multiplexereinrichtung (18), die das erste bzw. zweite Ausgangssignal des ersten Registers als erstes bzw. zweites Eingangssignal aufweist und von dem Ausgangssignal des zweiten Registers so gesteuert wird, daß es als Reaktion auf das Ausgangssignal des zweiten Registers die ersten und zweiten Eingangssignale selektiv als sein Ausgangssignal liefert;
eine Zwischenspeichereinrichtung (22), die die digitalen Wörter in jedem Entfernungsausschnitt summiert, um eine aufsummierte Summe für jeden Entfernungsausschnitt zu liefern; und
eine Prozessoreinrichtung (26), die die aufsummierten Summen in jedem Entfernungsausschnitt speichert und vergleicht, um den besonderen Entfernungsausschnitt, der dem Ziel zugeordnet ist, zu erkennen.

4. Korrelator nach Anspruch 3, der eine Signalspeichereinrichtung (24) beinhaltet, die die Summe der einzelnen Bits, die von dem Zwischenspeicher geliefert wird, zum Abgriff durch den Zwischenspeicher und den Prozessor speichert.

5. Korrelator nach Anspruch 4, bei dem das Ausgangssignal der Signalspeichereinrichtung (14) zu dem Zwischenspeicher zurückgeliefert wird und mit dem Ausgangssignal des Multiplexers summiert wird.

6. Verfahren zum Schaffen einer digitalen Entfernungskorrelation, um ein Ziel zu erfassen, das die Schritte beinhaltet:
(a) Umwandeln eines analogen Eingangssignals in ein digitales Signal, um eine Vielzahl von digitalen Wörtern für jede Reihenfolge von Entfernungsausschnitten zu liefern, wobei jedes digitale Wort mindestens zwei Bits aufweist;
(b) Summieren der digitalen Wörter in jedem Entfernungsausschnitt, um eine aufsummierte Summe für jeden Entfernungsausschnitt zu liefern; und
(c) Vergleichen der summierten digitalen Wörter, um den Entfernungsausschnitt, der dem Ziel zugeordnet ist, zu erkennen.

## Revendications

1. Un corrélateur de distance numérique pour détecter une cible, par l'identification d'une fenêtre de distance particulière associée à la cible, parmi une succession de fenêtres de distance, le corrélateur comprenant :
un seul moyen convertisseur analogique-numérique (12) pour produire un ensemble de mots numériques pour chaque fenêtre de distance de la succession de fenêtres de distance, chaque mot numérique comprenant au moins deux bits;
des moyens accumulateurs (22) pour faire la somme des mots numériques dans chaque fenêtre de distance, de façon à produire une somme accumulée pour chaque fenêtre de distance; et
des moyens (26) consistant en un processeur, pour enregistrer et pour comparer les sommes accumulées dans chaque fenêtre de distance, de façon à identifier la fenêtre de distance particulière qui est associée à la cible.

2. Un corrélateur selon la revendication 1, dans lequel les moyens accumulateurs (22) ont une entrée et une sortie, la sortie étant couplée en réaction à l'entrée pour produire la somme accumulée.

3. Un corrélateur de distance numérique pour détecter une cible, par l'identification d'une fenêtre de distance particulière qui est associée à la cible, parmi une succession de fenêtres de distance, le corrélateur comprenant :
des moyens convertisseurs analogique-numérique (12) pour produire un ensemble de mots numériques pour chaque fenêtre de distance de la succession de fenêtres de distance, chaque mot numérique comprenant au moins deux bits;
des moyens (14) consistant en un premier registre, pour enregistrer le signal de sortie des moyens convertisseurs analogique-numérique, ce premier registre ayant des premier et second signaux de sortie;
des moyens (20) consistant en un second registre, pour enregistrer un mot de code prédéterminé;
des moyens (18) consistant en un multiplexeur recevant respectivement à titre de premier et second signaux d'entrée les premier et second signaux de sortie du premier registre, et étant commandés par le signal de sortie du second registre, pour fournir sélectivement les premier et second signaux d'entrée, pour leur signal de sortie, sous la dépendance du signal de sortie du second registre;
des moyens (22) consistant en un accumulateur, pour faire la somme des mots numériques dans chaque fenêtre de distance, pour produire une somme accumulée pour chaque fenêtre de distance; et
des moyens (26) consistant en un processeur, pour enregistrer et pour comparer les sommes accumulées dans chaque fenêtre de distance, de façon à identifier la fenêtre de distance particulière qui est associée à la cible.

4. Un corrélateur selon la revendication 3, comprenant des moyens de mémorisation (24) pour enregistrer la somme des bits individuels que produit l'accumulateur, en vue de l'accès par l'accumulateur et le processeur.

5. Un corrélateur selon la revendication 4, dans lequel le signal de sortie des moyens de mémorisation (14) est renvoyé vers l'accumulateur et il est sommé avec le signal de sortie du multiplexeur.

6. Un procédé pour effectuer une corrélation de distance numérique dans le but de détecter une cible, comprenant les étapes suivantes :
(a) on convertit un signal d'entrée analogique en un signal numérique pour produire un ensemble de mots numériques pour chaque fenêtre d'une succession de fenêtres de distance, chaque mot numérique comprenant au moins deux bits;
(b) on fait la somme des mots numériques dans chaque fenêtre de distance pour produire une somme accumulée pour chaque fenêtre de distance; et
(c) on compare les mots numériques sommés pour identifier la fenêtre de distance qui est associée à la cible.
